(19) Europäisches Patentamt
European Patent Office
Office européen des brevets

(11) **EP 3 899 443 B1**

(12) **EUROPÄISCHE PATENTSCHRIFT**

(45) Veröffentlichungstag und Bekanntmachung des Hinweises auf die Patenterteilung:
**18.01.2023 Patentblatt 2023/03**

(21) Anmeldenummer: **19808763.7**

(22) Anmeldetag: **21.11.2019**

(51) Internationale Patentklassifikation (IPC):
**G01B 11/24** (2006.01) **G01F 1/66** (2022.01)
**G01F 25/00** (2022.01)

(52) Gemeinsame Patentklassifikation (CPC):
**G01F 1/66; G01B 11/24; G01F 25/00;**
G01B 2210/54

(86) Internationale Anmeldenummer:
**PCT/EP2019/082036**

(87) Internationale Veröffentlichungsnummer:
**WO 2020/126281 (25.06.2020 Gazette 2020/26)**

(54) **VERFAHREN ZUR INBETRIEBNAHME UND/ODER ÜBERPRÜFUNG EINER ULTRASCHALL-DURCHFLUSSMESSSTELLE**

METHOD FOR PUTTING INTO OPERATION AND/OR CHECKING AN ULTRASOUND THROUGHFLOW MEASURING POINT

PROCÉDÉ DE MISE EN SERVICE ET/OU DE CONTRÔLE D'UN POINT DE MESURE DE DÉBIT PAR ULTRASONS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.12.2018 DE 102018133476**

(43) Veröffentlichungstag der Anmeldung:
**27.10.2021 Patentblatt 2021/43**

(73) Patentinhaber: **Endress + Hauser Flowtec AG 4153 Reinach (CH)**

(72) Erfinder:
• **SCHWANEKAMP, Guido 2775-154 Parede (PT)**
• **BEZDEK, Michal 4147 Aesch (CH)**
• **WIEST, Achim 79576 Weil am Rhein (DE)**
• **KISSLING, Beat 4153 Reinach (CH)**

(74) Vertreter: **Penner, Paul Endress + Hauser Group Services (Deutschland) AG+Co. KG PatServe Colmarer Straße 6 79576 Weil am Rhein (DE)**

(56) Entgegenhaltungen:
EP-A2- 3 413 019      CN-U- 203 224 283
US-A1- 2006 123 922   US-B2- 9 557 200

## Beschreibung

Ultraschall-Durchflussmessgeräte werden vielfach in der Prozess- und Automatisierungstechnik eingesetzt. Sie erlauben in einfacher Weise, den Volumendurchfluss und/oder Massendurchfluss in einer Rohrleitung zu bestimmen. Die bekannten Ultraschall-Durchflussmessgeräte arbeiten häufig nach dem Laufzeitdifferenz-Prinzip. Beim Laufzeitdifferenz-Prinzip werden die unterschiedlichen Laufzeiten von Ultraschallwellen, insbesondere Ultraschallimpulsen, so genannten Bursts, relativ zur Strömungsrichtung der Flüssigkeit ausgewertet. Hierzu werden Ultraschallimpulse in einem bestimmten Winkel zur Rohrachse sowohl mit als auch entgegen der Strömung gesendet. Aus der Laufzeitdifferenz lässt sich die Fliessgeschwindigkeit und damit bei bekanntem Durchmesser des Rohrleitungsabschnitts der Volumendurchfluss bestimmen.

Die Ultraschallwellen werden mit Hilfe so genannter Ultraschallwandler erzeugt bzw. empfangen. Hierfür sind Ultraschallwandler in der Rohrwandung des betreffenden Rohrleitungsabschnitts fest angebracht. Es sind auch Clamp-On-Ultraschall-Durchflussmesssysteme bekannt. Bei diesen Systemen werden die Ultraschallwandler von außerhalb des Rohres an dessen Rohrwand gepresst. Ein großer Vorteil von Clamp-On-Ultraschall-Durchflussmesssystemen ist, dass sie das Messmedium nicht berühren und auf eine bereits bestehende Rohrleitung angebracht werden können.

Die Ultraschallwandler bestehen normalerweise aus einem elektromechanischen Wandlerelement, z.B. ein piezoelektrisches Element, und einer Koppelschicht. Bei Clamp-On-Systemen werden im elektromechanischen Wandlerelement die Ultraschallwellen als akustische Signale erzeugt und über die Koppelschicht zur Rohrwandung geführt und von dort in die Flüssigkeit geleitet.

Zwischen dem piezoelektrischen Element und der Koppelschicht kann eine weitere Koppelschicht angeordnet sein, eine so genannte Anpassungsschicht. Die Anpassungsschicht übernimmt dabei die Funktion der Transmission des Ultraschallsignals und gleichzeitig die Reduktion einer durch unterschiedliche akustische Impedanzen verursachte Reflexion an Grenzschichten zwischen zwei Materialen.

Sowohl bei Clamp-On-Systemen, als auch bei Inline-Systemen sind die Ultraschallwandlerpaare in einer gemeinsamen Ebene am Rohr angeordnet, entweder auf gegenüberliegenden Seiten des Rohres, dann verläuft das akustische Signal, projiziert auf einen Rohrquerschnitt, mindestens einmal bzw. $(N + 1)$-mal entlang einer Sekante durch das Rohr, oder auf derselben Seite des Rohres, dann wird das akustische Signal an der gegenüberliegenden Seite des Rohres reflektiert, wodurch das akustische Signal mindestens zweimal bzw. $N$-mal das Rohr entlang der auf den Querschnitt durch das Rohr projizierten Sekante durchquert, wobei N eine geradzahlige, natürliche Zahl ist. Es sind auch Clamp-On-Durchflussmessstellen bekannt, die mehr als zwei Ultraschallwandlern aufweisen, die entlang der Rohrachse auf einer Seite oder auf gegenüberliegenden Seiten des Rohres außen angeordnet sind. Clamp-On-Durchflussmessgeräte zeichnen sich dadurch aus, dass sie ohne Prozessunterbruch auf einer bestehenden Rohrleitung installiert werden können. Um ein Clamp-On-Gerät erfolgreich in Betrieb nehmen zu können, müssen einige Voraussetzungen erfüllt werden:

- Der Sensortyp muss abhängig von den Anwendungsparametern korrekt ausgewählt und in der Elektronik eingestellt werden. Die sensorspezifischen Parameter, falls vorhanden, müssen ebenfalls korrekt übertragen werden.

- Der Abstand zweier ein Sensorpaar bildender Ultraschallwandler muss abhängig von den Anwendungsparametern korrekt berechnet und eingestellt werden.

- Die Ultraschallwandler müssen korrekt zueinander und relativ zur Rohrachse ausgerichtet werden.

Die Nichteinhaltung dieser Voraussetzungen führt zu einer erhöhten Messunsicherheit und im Extremfall zum Versagen der Messung.

Bestehende Clamp-On-Systeme bieten nur wenig Unterstützung bei der Durchführung der einzelnen Montageschritte. Dadurch kommt es immer wieder zu Fehlinstallationen, die die obigen Voraussetzungen nicht ausreichend erfüllen. Die Nichteinhaltung der Voraussetzungen wird in der Regel nicht automatisch erkannt und angezeigt.

Aus der EP1573276B1 ist eine Vorrichtung zum Positionieren eines Clamp-On-Durchflussmessgerätes an ein Behältnis unter Zuhilfenahme einer mit einer Anzeige versehenen Positioniereinheit bekannt.

Das Dokument US 2006/123922 A1 offenbart ein Verfahren zur Inbetriebnahme und/oder Überprüfung einer Ultraschall Durchflussmessstelle mittels einer Bedieneinheit, wobei die Bedieneinheit mindestens eine Anzeigeeinheit aufweist, wobei die Ultraschall Durchflussmessstelle eine Rohrleitung zum Führen eines Mediums und mindestens einen Ultraschallwandler aufweist.

Der Erfindung liegt die Aufgabe zugrunde ein Verfahren bereitzustellen, dass die Montage von Ultraschallwandlern an eine Rohrleitung vereinfacht.

Die Aufgabe wird gelöst durch das Verfahren nach Anspruch 1.

Das erfindungsgemäße Verfahren zur Inbetriebnahme und/oder Überprüfung einer Ultraschall-Durchflussmessstelle mittels einer Bedieneinheit, wobei die Bedieneinheit mindestens eine Anzeigeeinheit und eine Kamera aufweist, wobei die Ultraschall-Durchflussmessstelle eine Rohrleitung zum Führen eines Mediums und mindestens einen Ultraschallwandler aufweist, umfasst:

- Identifizieren der Ultraschall-Durchflussmessstelle gegenüber der Bedieneinheit;

- Ermitteln von einstellbaren Parametern anhand der Identität der Ultraschall-Durchflussmessstelle;

- Erfassen von Geometriedaten von zumindest einem Teil der Ultraschall-Durchflussmessstelle mittels der Kamera;

- Analysieren der erfassten Geometriedaten und Ableiten von zumindest einem Parameterwert für zumindest einen der einzustellenden Parameter anhand des Analyseresultates und der Identität;

- Ermitteln mindestens einer optimalen Montageposition anhand zumindest des abgeleiteten Parameterwertes;

- Anzeigen mindestens einer optimalen Montageposition und/oder zumindest des Parameterwertes für zumindest einen einzustellenden Parameter mittels der Anzeigeeinheit; und

- Überprüfen der Montageposition eines Ultraschallwandlers mit einer der optimalen Montageposition und/oder positionieren des Ultraschallwandlers an eine der ermittelten optimalen Montagepositionen.

Es ist vorteilhaft, wenn die Geometriedaten der Ultraschall-Durchflussmessstelle mittels der Kamera erfasst werden und dem Bedienpersonal für die Inbetriebnahme zur Verfügung gestellt werden. Besonders vorteilhaft ist, wenn das Bedienpersonal die Ultraschall-Durchflussmessstelle bloß mit der Kamera aufzunehmen braucht und die optimale Montageposition direkt angezeigt bekommt. Die optimale Montageposition umfasst auch einen optimaler Bereich, in dem der Ultraschallwandler bevorzugt positioniert werden soll.

Die Anzeigeeinheit der Bedieneinheit zeigt das aktuelle Sichtfeld des Bedienpersonals oder der Kamera. Die Kamera der Bedieneinheit erfasst gleichzeitig die Umgebung und "sieht" das selbe Sichtfeld wie das Bedienpersonal. Im einfachsten Fall handelt es sich bei der Anzeigeeinheit um ein kombiniertes transparentes Glas mit einem Projektor. Das Bedienpersonal blickt durch das Glas hindurch. Die durch das Glas betrachtete Umgebung wird als Sichtfeld bezeichnet. Der Projektor ist dazu ausgestaltet, eine Projektion auf das Glas zu werfen, welche das Bedienpersonal wahrnimmt. Über das aktuelle Sichtfeld des Bedienpersonals wird so die optimale Montageposition angezeigt. Es ist vorgesehen, dass ein Symbol die Ultraschall-Durchflussmessstelle an derjenigen Stelle überlagert, welche der optimalen Montageposition entspricht.

Es können verschiedene Bedieneinheiten für die Inbetriebnahme verwendet werden. Im einfachsten Fall ist die Bedieneinheit Teil der Regel-/ Auswerteeinheit und mit den Ultraschallwandlern bzw. mit der Ultraschall-Durchflussmessstelle verbunden. Eine weitere Möglichkeit sind mobile Endgeräte, wie Smartphones, Tablets oder Smartwatches.

Die Anzeigeeinheit umfasst im einfachsten Fall eine an der Ultraschall-Durchflussmessstelle, insbesondere an der Regel-/Auswerteeinheit angebrachte Anzeige in Form eines Displays. Alternativ ist die Anzeigeeinheit das Display eines mobilen Endgerätes oder der Bildschirm einer Datenbrille. Alternativ ist die Anzeigeeinheit ein Projektor, der die einzustellenden Parameter oder die optimale Montageposition auf die Ultraschall-Durchflussmessstelle, insbesondere auf die Rohrleitung projiziert.

Die Identifikation der Ultraschall-Durchflussmessstelle kann auf verschieden Arten erfolgen. Im einfachsten Fall wählt das Bedienpersonal die Ultraschall-Durchflussmessstelle aus einer Liste aus, welche ihm auf der Anzeigeeinheit der Bedieneinheit angezeigt wird. Anschließend werden die Prozess- und/oder Systemgrößen und einzustellenden Parameter von einer internen Datenbank abgerufen. Alternativ werden Identifikationsdaten aus der Ultraschall-Durchflussmessstelle ausgelesen, insbesondere mittels einer Funkverbindung, insbesondere Bluetooth oder Wi-Fi, zwischen Ultraschall-Durchflussmessstelle und Bedieneinheit. Eine weitere Möglichkeit stellt das optische Identifizieren des Feldgeräts dar. Hierfür wird die Ultraschall-Durchflussmessstelle mittels der Kamera erfasst und auf definierte Geometrien untersucht, welche mit einer Datenbank abgeglichen werden. Ein optisches Identifizieren des Feldgeräts umfasst auch das Auslesen eines optischen Codes, beispielsweise eines zweidimensionalen Codes, insbesondere eines Barcodes, eines QR-Codes oder einer Datamatrix, welcher an der Ultraschall-Durchflussmessstelle angebracht ist. Mit der Identifizierung der Messstelle kann auch ein Aktualisieren des Status, wie z.B. eine geänderte Signalstärke, Laufzeit etc. erfolgen. Dies ist insbesondere bei batteriebetriebenen Messstellen vorteilhaft, da bei denen aus Energiegründen eine ständige Kommunikation des unveränderten Zustandes nicht erwünscht ist.

Stehen die Prozess- und/oder Systemgrößen nicht zur Verfügung erfolgt nach der Identifizierung ein zusätzlicher Verfahrensschritt, in dem die Prozess- und/oder Systemgrößen zur Ermittlung des Durchflusses durch das Bedienpersonal aufgenommen werden. Die Prozess- und/oder Systemgrößen umfassen einen Rohrdurchmesser, eine Rohrwandstärke, ein Rohrmaterial für die Bestimmung der Schallgeschwindigkeit im Rohr, ein Medium zur Bestimmung der Schallgeschwindigkeit im Medium, und evtl. auch Anzahl der Traversen. Eine empfohlene Anzahl der Traversen kann aber auch vom Gerät anhand der obigen Prozessparameter ermittelt und ausgegeben werden. Des Weiteren umfassen die Prozess- und/oder Systemgrößen auch sensorabhängige Parameter wie beispielsweise ein Sensortyp, mindestens eine Sensorfrequenz, eine Mittenfrequenz und/oder einen Frequenzbereich, ein Winkel im Ultraschallwandler und/oder eine Schallgeschwindigkeit im Ultraschallwandler.

Abhängig von der Identität der Ultraschall-Durchflussmessstelle können Parameter eingestellt werden. Einstellbare Parameter sind der Abstand vom Ultraschallwandler zu einer einlauf- oder auslaufseitig angebrachten Störung, insbesondere zu einem Ventil, einem Rohrbogen oder einer Blende, der Winkel zwischen der Längsachse eines Ultraschallwandlers und der Rohrachse, der aufgespannte Winkel zweier Ultraschallwandler-Längsachsen, der Abstand zwischen den jeweiligen Ultraschallwandlern, Ausrichtung der jeweiligen Ultraschallwandler und der Mittelpunktswinkel, der durch eine den Ultraschallwandler scheidende Gerade und die vertikale Längsebene des Rohres gebildet wird. Ein weiterer einstellbarer Parameter kann auch die Anzahl der Traversen sein.

Aus den aufgenommenen Geometriedaten kann beispielsweise der Außendurchmesser des Messrohres ermittelt werden.

Im einfachsten Fall umfasst der einstellbare Parameter ausschließlich den einzustellenden Abstand zwischen zwei Ultraschallwandler oder zwischen einer aktuellen und der optimalen Montageposition.

Es sind Ultraschall-Durchflussmessstellen bekannt, bei denen die Ultraschallwandler mittels einer Einbauvorrichtung an die Rohrleitung angebracht werden. Dies wird bei der Ermittlung der optimalen Montageposition berücksichtigt. Angezeigt wird dann ausschließlich oder zusätzlich die optimale Montageposition der Einbauvorrichtung an die Rohrleitung.

Stellt sich nach Überprüfen der Montageposition heraus, dass sich der Ultraschallwandler an einer der optimalen Montagepositionen befindet, wird dem Bedienpersonal dies an der Anzeigeeinheit optisch oder mittels eines akustischen Signales kenntlich gemacht.

Gemäß einer Ausgestaltung wird eine Referenzgeometrie der Ultraschall-Durchflussmessstelle mittels der Kamera erfasst, wobei die Referenzgeometrie in zumindest einer Dimension eine definierte Länge oder einen definierten Winkel aufweist, wobei anhand der Referenzgeometrie ein dreidimensionales Topologiemodell, insbesondere ein dreidimensionales Polygonnetz der Ultraschall-Durchflussmessstelle erstellt wird.

Aus der Literatur ist das SLAM-Problem ("Simultaneous Localization and Mapping") bekannt, welches ein Problem der Robotik bezeichnet, bei dem ein mobiler Roboter gleichzeitig eine Karte seiner Umgebung erstellen und seine Position innerhalb dieser Karte schätzen muss. Eine Lösung für dieses Problem stellt das Berechnen eines dreidimensionalen Topologiemodells, insbesondere eines Polygonnetzes mithilfe einer Referenzgeometrie dar. Die Kamera wird hierfür entweder um die Referenzgeometrie bewegt oder der Blickwinkel von der Kamera auf die Referenzgeometrie wird mittels kleiner Bewegungen minimal variiert. Mittels einer Stereokamera kann auf diesen ersten Schritt verzichtet werden. Alternativ kann eine Tiefenkamera verwendet werden, welche diesen Schritt selbstständig übernimmt. Anschließend wird ein dreidimensionales Abbild der Messstelle in Form eines Topologiemodells erstellt. Die definierte Länge von zumindest einer der Dimensionen der Referenzgeometrie wird der Bedieneinheit mitgeteilt, wodurch die Bedieneinheit einen definierten Abstand zwischen charakteristischen Merkmalen des dreidimensionalen Topologiemodells berechnet. Durch Erweitern, bzw. Aufspannen beispielsweise eines Polygonnetzes kann die Raumgröße und die Lage der Bedieneinheit im dreidimensionalen Raum bestimmt werden.

Im einfachsten Fall sind an der Ultraschall-Durchflussmessstelle bzw. an den Ultraschallwandler Markierungen angebracht, die die Referenzgeometrie bilden. Diese können eine feste Länge bzw. einen festen Winkel aufweisen, nach denen sich die Bedieneinheit beim Ermitteln der Geometriedaten richtet.

Es ist besonders vorteilhaft, wenn das erstellte Topologiemodell angezeigt und durch das Bedienpersonal mittels der Bedieneinheit nachträglich bearbeitet bzw. angepasst werden kann.

Gemäß einer Ausgestaltung wird das dreidimensionale Topologiemodell verwendet wird, um die von der Kamera erfassten Geometriedaten zu ermitteln.

In einer bevorzugten Weiterbildung des erfindungsgemäßen Verfahrens ist vorgesehen, dass das dreidimensionale Topologiemodell verwendet wird, um von der Kamera erfasste Objekte zu vermessen und einen Maßstab für die von der Kamera erfassten, auf dem Sichtfeld angezeigten Objekte zu definieren. Da der Bedieneinheit die Maße des dreidimensionalen Topologiemodells bekannt sind, können beliebige Geometrien bzw. Geometriedaten der Messstelle erfasst und Vermessen werden. Dieses Verfahren weist eine sehr hohe Genauigkeit auf. Im Zusammenhang mit dem erfindungsgemäßen Verfahren werden insbesondere die Dimensionen der Ultraschall-Durchflussmessstelle und/oder Teile der Ultraschall-Durchflussmessstelle, wie die Rohrleitung oder die Ultraschallwandler ausgemessen.

Auf der Anzeigeeinheit können nun beispielsweise die Größenangaben der Teile angezeigt werden und/oder eine Maßstabslänge permanent eingeblendet werden, welche sich dynamisch ändert, wenn der Bedienpersonal die Kamera auf die Teile der Ultraschall-Durchflussmessstelle hinzubewegt, bzw. von den Teilen wegbewegt, bzw. die Zoomfunktion der Kamera verwendet. Des Weiteren passen sich die angezeigten Größenangaben an, wenn Änderungen, wie Verschieben der Ultraschallwandler an der Messstelle vorgenommen werden.

Das Erfassen der Geometriedaten umfasst zuallererst das Erkennen der Messstelle mittels eines Bilderkennungsalgorithmus, insbesondere der einzelnen Komponenten der Messstelle aus den aufgenommenen Bildern bzw. dem Topologiemodell. Sind die einzelnen Komponenten eindeutig identifiziert, lassen sich die Geometriedaten ableiten.

Gemäß einer Ausgestaltung wird im Rahmen des Analysierens der erfassten Geometriedaten mindestens ein dreidimensionales Visualisierungsmodell von zumindest einem Teil der Ultraschall-Durchflussmessstelle erstellt wird.

Das dreidimensionale Visualisierungsmodell kann unterschiedlich ausgestaltet sein. Im einfachsten Fall ist es eine Markierung in Form beispielsweise eines Pfeils, der die optimale Montageposition oder eine optimale Ausrichtung andeutet. In einer Weiterentwicklung stellt das dreidimensionale Visualisierungsmodell einen Bereich dar, in dem der Ultraschallwandler angebracht werden soll. Idealerweise stellt das dreidimensionale Visualisierungsmodell einen Ultraschallwandler in der Form des anzubringenden Ultraschallwandlers dar, so dass das Bedienpersonal bloß sicherstellen muss, dass die Kontur des anzubringenden Ultraschallwandlers mit dem dreidimensionalen Visualisierungsmodell übereinstimmen.

Gemäß einer Ausgestaltung umfasst das Verfahren die Verfahrensschritte:

- Anzeigen des dreidimensionalen Visualisierungsmodells an der optimalen Montageposition an der Rohrleitung,
- Erfassen von Geometrie- und Positionsdaten von zumindest dem angebrachten Durchflusswandler mittels der Kamera;
- Überprüfen auf Übereinstimmung zwischen den Geometrie- und Positionsdaten des dreidimensionalen Visualisierungsmodells und den Geometrie- und Positionsdaten des angebrachten Ultraschallwandlers mittels der Bedieneinheit, wobei das dreidimensionale Topologiemodell verwendet wird, um die von der Kamera erfassten Positionsdaten zu ermitteln.

Die Bedieneinheit ist vorteilhaft dazu eingerichtet mittels der Geometriedaten der Ultraschall-Durchflussmessstelle, die Geometrie- und Positionsdaten des Ultraschallwandlers zu bestimmen.

Stimmen diese mit den Geometrie- und Positionsdaten des basierend auf die optimale Montageposition und der Identität der Ultraschall-Durchflussmessstelle erstellten dreidimensionalen Visualisierungsmodells überein, so wird die Inbetriebnahme abgeschlossen.

Gemäß einer Ausgestaltung wird auf der Anzeigeeinheit das Sichtfeld des Bedienpersonals dargestellt, und wobei das Visualisierungsmodell den Teil der Ultraschall-Durchflussmessstelle auf dem von der Anzeigeeinheit dargestellten Sichtfeld zumindest teilweise überlagert.

Es ist besonders vorteilhaft, wenn das Visualisierungsmodell direkt auf dem mittels der Anzeigeeinheit dargestellte Sichtfeld angezeigt bzw. mit der Ultraschall-Durchflussmessstelle überlagert dargestellt wird. Somit wird dem Bedienpersonal direkt an der betroffenen Stelle angezeigt werden, wie weiter vorzugehen ist die Ultraschall-Durchflussmessstelle optimale einzurichten.

Diese Methode eignet sich für Bedieneinheiten, welche ein transparentes Glas aufweisen.

Gemäß einer Ausgestaltung visualisiert die Anzeigeeinheit als Sichtfeld des Bedienpersonals ein von der Kamera erfasstes, ständig aktualisiertes Bild, wobei das Visualisierungsmodell der Teile der Ultraschall-Durchflussmessstelle des auf der Anzeigeeinheit angezeigten Bildes zumindest teilweise überlagert.

Die Anzeigeeinheit der Bedieneinheit zeigt das Livebild, welches von der Kamera aufgenommen wird. Der Bedienpersonal sollte die Bedieneinheit derart auf die Ultraschall-Durchflussmessstelle richten, dass die einzelnen Teile der Ultraschall-Durchflussmessstelle von der Kamera erfasst werden. Über das aktuelle Livebild der Kamera wird das Visualisierungsmodell gelegt. Diese Methode eignet sich für Bedieneinheiten, welche kein transparentes Glas aufweisen, sondern ein herkömmliches Display als Anzeigeeinheit besitzen.

Gemäß einer Ausgestaltung umfasst das Verfahren den Verfahrensschritt:

- Analysieren der erfassten Positionsdaten und Ableiten von zumindest einem Parameterwert für zumindest einen der einzustellenden Parameter anhand des Analyseresultates und der Identität.

Es ist besonders vorteilhaft, wenn das Montieren oder Positionieren der Ultraschallwandler mit der Kamera und der Bedieneinheit überwacht wird. Sind die Ultraschallwandler ordnungsgemäß angebracht, kann dem Bedienpersonal dies beispielsweise mit der Bedieneinheit signalisiert oder an der Anzeigeeinheit angezeigt werden.

Gemäß einer Ausgestaltung wird als Bedieneinheit eine Datenbrille verwendet.

Es ist besonders vorteilhaft, wenn die Bedieneinheit eine Datenbrille ist. Dadurch muss das Bedienpersonal nicht neben dem Einrichten und Anbringen des Ultraschallwandlers und Abgleichen ebendieses mit der angezeigten optimalen Montageposition noch zusätzlich die Bedieneinheit halten.

Eine solche Datenbrille besitzt einen Bildschirm, welcher das von der Kamera aufgenommene Sichtfeld anzeigt. Für den Bedienpersonal erscheint es, als ob das von der Kamera erfasste Sichtfeld von den eigenen Augen erfasst wird. Alternativ weist eine Datenbrille einen Projektor auf, welche ein Bild auf eine Scheibe, bzw. ein Glas der Brille projiziert. Der Bedienpersonal sieht die Umgebung durch die Scheibe der Brille. Gleichzeitig erfasst eine Kamera der Brille die Umgebung in dem Maße, wie die Augen des Bedienpersonals die Umgebung erfassen. Anstatt das gesamte von der Kamera aufgenommene Sichtfeld der Umgebung auf die Scheibe zu projizieren, wird lediglich das Visualisierungsmodell auf die Scheibe projiziert. Ein Beispiel für solch eine Datenbrille letzteren Typs, welche für das erfindungsgemäße Verfahren geeignet ist, stellt die "HoloLens" von Microsoft dar.

Gemäß einer Ausgestaltung wird als Bedieneinheit ein mobiles Endgerät verwendet wird.

Hierfür eignet sich beispielsweise ein Smartphone oder ein Tablet, aber auch ein Laptop, welcher eine Webcam aufweist, welche es erlaubt, die Umgebung in der entgegengesetzten Richtung zu dem Bedienpersonal zu erfassen. Die Auswahl eines Symbols, das Erhöhen/Verringern eines Parameterwerts, das Bestätigen eines Parameterwerts und/oder das Verschieben eines Symbols erfolgt mittels der Eingabemittel des mobilen Endgeräts, beispielsweise mittels Berührungen des Touchscreens, mittels Tasteneingaben und/oder mittels Eingaben via Maus.

Gemäß einer Ausgestaltung ist die Anzeigeeinheit ein Projektor, bevorzugt ein portabler, autarker Projektor, der das Visualisierungsmodell auf die Rohrleitung projiziert.

Gemäß einer Ausgestaltung sind die Kamera und die Anzeigeeinheit auf mindestens einem Stativ montiert und in einem definierten Abstand zur Rohrleitung angeordnet.

Gemäß einer Ausgestaltung ist die Anzeigeeinheit ein Projektor, bevorzugt ein portabler, autarker Projektor, der ein dynamisches Licht-Muster auf die Rohrleitung projiziert und so die Geometriedaten erhält. Dynamisch bedeutet in diesem Fall, dass beispielsweise ein Gitter auf die Szene projiziert wird und das Gitter sich zeitlich in der Position verändert. Die Geometriedaten werden mittels elektrooptischer Entfernungsmessung und bevorzugt mittels optischer Triangulation ermittelt.

Gemäß einer Ausgestaltung umfasst das Verfahren die Verfahrensschritte:

- Übermitteln von mittels der Ultraschall-Durchflussmessstelle ermittelten Messwerten an die Bedieneinheit;

- Ermitteln der optimalen Montageposition unter Berücksichtigung der Messwerte; und

- Aktualisieren der optimalen Montageposition in Abhängigkeit von den Messwerten.

In einer vorteilhaften Ausgestaltung des erfindungsgemäßen Verfahrens ist vorgesehen, dass die Messwerte und/oder die Identität der Durchflussmessstelle mittels einer Funkverbindung, insbesondere Bluetooth, an die Bedieneinheit übermittelt werden. Alternativ zu Bluetooth kann eine beliebige Funkverbindung verwendet werden, beispielsweise Wi-Fi oder ZigBee. Alternativ können die Messwerte indirekt an die Bedieneinheit übermittelt werden. Hierfür werden die Messwerte nicht auf direktem Wege an Die Bedieneinheit gesendet, sondern werden von dem Ultraschall-Durchflussmesser an eine zu dem Ultraschall-Durchflussmesser verschiedene Instanz übermittelt, beispielsweise an die Leitstelle der Anlage, an einen anderen Ultraschall-Durchflussmesser, an eine weitere Bedieneinheit, an eine cloudbasierte Datenbank etc. Von dieser Instanz werden die Messwerte dann an die Bedieneinheit übermittelt.

Gemäß einer Ausgestaltung ist die Kamera nicht an der Bedieneinheit angebracht, sondern steht lediglich mit der Bedieneinheit im Datenaustausch. Dabei kann die Kamera ausschließlich zum Aufnehmen von Bildern verwendet werden, die dann an die Bedieneinheit gesendet und dort ausgewertet werden. Alternativ ist die Kamera dazu eingerichtet die Geometriedaten anhand der Bilder zu ermitteln und diese an die Bedieneinheit weiterzuleiten.

Gemäß einer Ausgestaltung berücksichtigt die Bedieneinheit mittels der Ultraschall-Durchflussmessstelle ermittelte Messwerte zur Bestimmung der optimalen Montageposition. Messwerte umfassen eine Signalintensität und/oder ein Signal-zu-Rauschen-Verhältnis. Beim Montieren der Ultraschallwandler kann es passieren, dass trotz Einhalten der optimalen Montageposition keine ausreichend hohe Signalintensität detektiert wird. Dies tritt beispielsweise dann ein, wenn sich im Signalpfad Luft befindet, korridierte Rohroberflächen vorliegen oder sich Belag in der Innenseite des Rohres gebildet hat. Ist die Signalintensität nicht erwartungsgemäß hoch wird von der Bedieneinheit eine neue optimale Montageposition ermittelt und an der Anzeigeeinheit ausgegeben.

Die Erfindung wird anhand der nachfolgenden Figuren näher erläutert. Es zeigt:

Fig. 1: eine Ultraschall-Durchflussmessstelle gemäß Stand der Technik;

Fig. 2: eine schematische Darstellung der Inbetriebnahme einer Ultraschall-Durchflussmessstelle;

Fig. 3: eine weitere schematische Darstellung der Inbetriebnahme einer Ultraschall-Durchflussmessstelle; und

Fig. 4: eine erste Ausgestaltung des erfindungsgemäßen Verfahrensablaufes als Verfahrenskette.

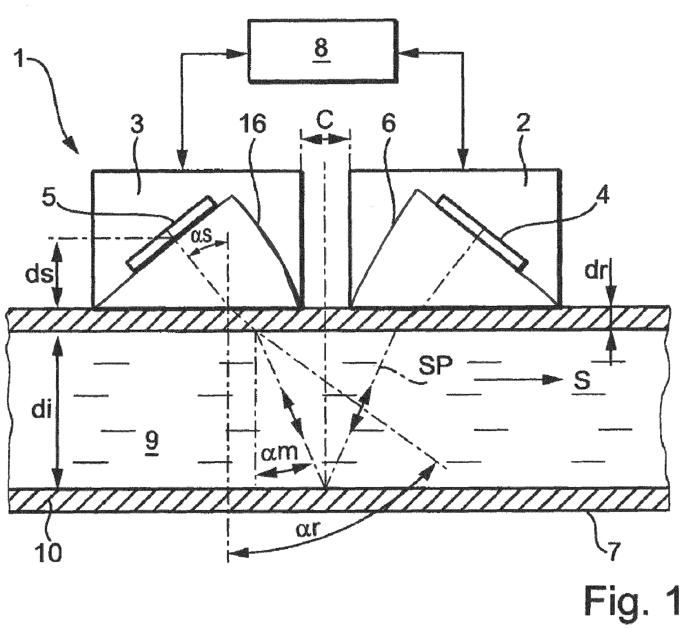

Fig. 1 zeigt eine schematische Darstellung des Schallpfades SP eines Ultraschall-Messsignals in einer Rohrleitung bzw. in einem Rohr 7. Das Clamp-On Durchflussmessgerät 1 ermittelt den Volumendurchfluss bzw. den Massendurchfluss des Mediums 9 in dem Rohr 7 nach der bekannten Laufzeitdifferenz-Methode. Wesentliche Teile des Clamp-On Ultraschall-Durchflussmessgerätes 1 sind die beiden Ultraschallwandler bzw. Ultraschallsensoren 2; 3 und die Regel-/ Auswerteeinheit 8. Die beiden Ultraschallwandler 2; 3 sind mittels einer in der Fig. 1 nicht gesondert dargestellten Befestigungsvorrichtung an dem Rohr 7 angebracht. Entsprechende Befestigungsvorrichtungen sind aus dem Stand der Technik hinlänglich bekannt und werden auch von der Anmelderin angeboten und vertrieben. Das Rohr 7 mit dem Innendurchmesser *di* wird von dem Medium 9 in Strömungsrichtung S durchströmt.

Ein Ultraschallwandler 2; 3 weist als wesentliche Bestandteile zumindest ein piezoelektrisches Element 4; 5, das die Ultraschall-Messsignale erzeugt und/oder empfängt, und einen Koppelkeil 6; 16 auf. Die Ultraschall-Messsignale werden über den Koppelkeil 6; 16 und über die Rohrwand 10 in das vom Medium 9 durchströmte Rohr 7 eingekoppelt bzw. aus dem Rohr 7 ausgekoppelt. Die beiden Ultraschallwandler 2; 3 sind derart ausgestaltet, dass sie Ultraschall-Messsignale aussenden und empfangen. Der optimale Abstand c der beiden Ultraschallwandler 2; 3 ist - wie bereits an vorhergehender Stelle beschrieben - von verschiedenen System- und oder Prozessgrößen abhängig. Um sicherzustellen, dass die maximale Energie, die von einem Ultraschallwandler 2; 3 ausgesendet wird, auch in dem jeweils anderen Ultraschallwandler 3; 2 empfangen wird, ist eine auf den jeweiligen Anwendungsfall abgestimmte Positionierung der Ultraschallwandler 2; 3 erforderlich. Bei diesen System- und Prozessgrößen handelt es sich beispielsweise um den Innendurchmesser *di* des Rohres 7, um die Wandstärke *dr* des Rohres 7, um die Schallgeschwindigkeit er des Materials, aus dem das Rohr 7 gefertigt ist, oder um die Schallgeschwindigkeit *cm* des Mediums 9. Prinzipiell ist eine Justierung der Ultraschallwandler 2; 3 sowohl bei der Erstmontage als auch immer dann erforderlich, wenn es zu einer wesentlichen Änderung von zumindest einer Prozessund/oder Systemgröße kommt.

In dem gezeigten Ausführungsbeispiel ist der Abstand c der beiden Ultraschallwandler 2; 3 so bemessen, dass sich die Ultraschall-Messsignale, die entsprechend der Laufzeitdifferenz-Methode wechselweise von den beiden Ultraschallwandlern 2; 3 ausgesendet und empfangen werden, über nur einen Schallpfad SP in dem vom Medium 9 durchströmten Behältnis 7 ausbreiten. Der Schallpfad *SP* hat zwei Traversen. Eine Traverse kennzeichnet den Teilbereich des Schallpfades *SP,* auf dem ein Ultraschall-Messsignal den Behälter 7 einmal quert. Die Querung kann diametral oder kordial sein.

Sind die nachfolgend genannten Größen zumindest näherungsweise bekannt, so lässt sich die optimale Montageposition für die Ultraschallwandler errechnen. Bei den Größen handelt es sich im Einzelnen um:

- den Abstand ds eines Ultraschallwandlers 2; 3 zur Rohrwand 10;
- die Dicke *dr* der Rohrwand 10;
- den Innendurchmesser *di* des Rohres 7;
- die Schallgeschwindigkeit es im Vorlaufkörper 6; 7;
- die Schallgeschwindigkeit er im Rohr 7;
- die Schallgeschwindigkeit *cm* im Medium 9;
- den Winkel *as* im Ultraschallwandler 2; 3;
- den Winkel *ar* im Rohr 7;
- den Winkel *am* im Medium;
- die Anzahl *n* der Traversen. Im gezeigten Fall ist *n* = 2.

Der Einstrahlwinkel *ar* im Rohr 7 läßt sich unter Zuhilfenahme des Snellius' Gesetzes durch die folgende Formel darstellen:

$$ar = \operatorname{asin}(\frac{cr}{cs} \cdot \sin(as))$$

Der Einfallwinkel am ins Medium 9 lässt sich durch die folgende Formel beschreiben:

$$am = \operatorname{asin}(\frac{cm}{cs} \cdot \sin(as))$$

Die Laufzeit *Tsoll* der Ultraschall-Messsignale auf dem Schallpfad *SP* läßt sich dann anhand der nachfolgenden Formel berechnen:

EP 3 899 443 B1

$$Tsoll = \frac{2\cdot ds}{\cos(as)\cdot cs} + \frac{2\cdot dr}{\cos(ar)\cdot cr} + \frac{n\cdot di}{\cos(am)\cdot cm}$$

Sind alle Parameter bekannt, so berechnet sich die Laufzeit *Tsoll* des Ultraschall-Messsignals nach obiger Formel. Hierbei wurde übrigens die Annahme getroffen, dass in der Rohrleitung 7 der Durchfluss Null ist. In einer Vielzahl von Anwendungsfällen ist nun zumindest die Schallgeschwindigkeit *cm* des Mediums 9 nicht bekannt. Die hängt nämlich von der Temperatur, dem Druck und der Zusammensetzung des zu führenden Mediums ab. Folglich stimmt die gemessene Laufzeit *Tist* nicht mit der errechneten Laufzeit *Tsoll* überein, da in vielen Fällen für die Schallgeschwindigkeit *cm* des Mediums 9 zwecks Vereinfachung ein Schätzwert genommen wird. Ein besseres Ergebnis lässt sich erzielen, wenn die Schallgeschwindigkeit *cm* des Mediums 9 in einem separaten Verfahren gemessen wird.

Anschließend wird die tatsächliche Laufzeit *Tist* des Ultraschall-Messsignals gemessen und mit der errechneten Laufzeit *Tsoll* verglichen. Ergibt sich anhand des Vergleichs, dass die gemessene Laufzeit *Tist* größer ist als die vorgegebene Laufzeit *Tsoll,* so müssen die beiden Ultraschallwandler 2; 3 näher zusammengerückt werden, der Abstand c der beiden Ultraschallwandler 2; 3 wird also verringert. Ist hingegen die gemessene Laufzeit *Tist* kleiner als die vorgegebene Laufzeit *Tsoll,* so müssen die beiden Ultraschallwandler 2; 3 auseinandergerückt werden, d.h. der Abstand c wird vergrößert. Erfindungsgemäß wird dem Bedienpersonal nun an der Anzeigeeinheit angezeigt, in welcher Richtung und ggf. um welchen Wert die Relativbewegung der Ultraschallwandler 2; 3 zu erfolgen hat oder an welche Position an der Rohrleitung der Ultraschallwandler 2; 3 anzubringen ist.

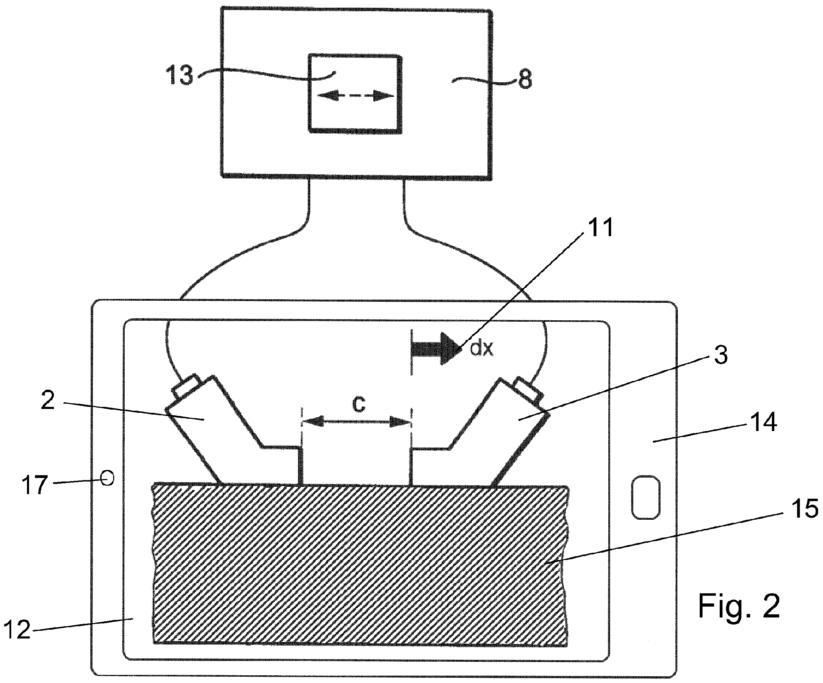

Die Fig. 2 zeigt eine erste Ausgestaltung des erfindungsgemäßen Verfahrens. Mittels der Bedieneinheit 14, in diesem Fall ein Smartphone oder ein Tablet, insbesondere mittels der an der Bedieneinheit 14 angebrachten Kamera 17 wird der eingestellte Abstand zwischen den zwei Ultraschallwandlern 2; 3 ermittelt und ein einzustellender Abstand *dx,* der zum Erreichen der optimalen Montageposition benötigt wird, errechnet und mittels der Anzeigeeinheit 12 angezeigt. Das Visualisierungsmodell 11 ist ein Pfeil, der die Richtung angibt in die der zweite Ultraschallwandler 3 verschoben werden muss. Zusätzlich wird auch die Länge *dx* mit angezeigt, um die der zweite Ultraschallwandler 3 verschoben werden muss.

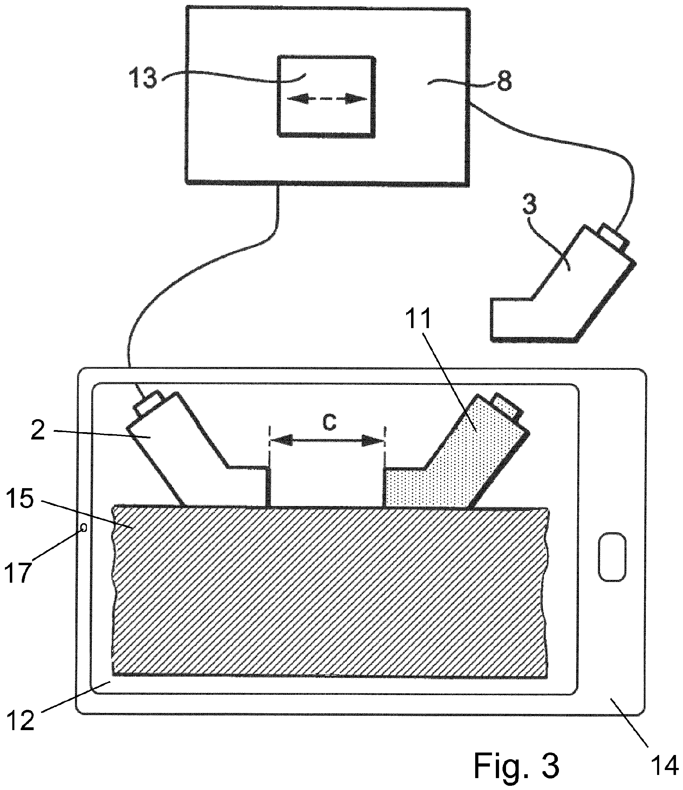

Die Fig. 3 zeigt eine zweite Ausgestaltung des erfindungsgemäßen Verfahrens. Mittels der Bedieneinheit 14 wird auf der Anzeigeeinheit 12 zusätzlich zu dem mit der Kamera 17 aufgenommenen Bild eine dreidimensionales Visualisierungsmodell 11 auf die Rohrleitung 15 gelegt bzw. projiziert. Das Visualisierungsmodell 11 wurde anhand der erfassten Geometrie- und Positionsdaten erstellt. Das Bedienpersonal braucht nun nur noch den zweiten Ultraschallwandler 3 so an die Rohrleitung 15 anzubringen, dass die mittels der auf der dem Display abgewandten Seite angebrachten Kamera 17 und Bedieneinheit 14 aufgenommenen Geometrie- und Positionsdaten des zweiten Ultraschallwandlers 3 mit den Geometrie- und Positionsdaten des Visualisierungsmodells 11 übereinstimmen. Ist dies erfolgt, wird die Ultraschall-Durchflussmessstelle in Betrieb genommen.

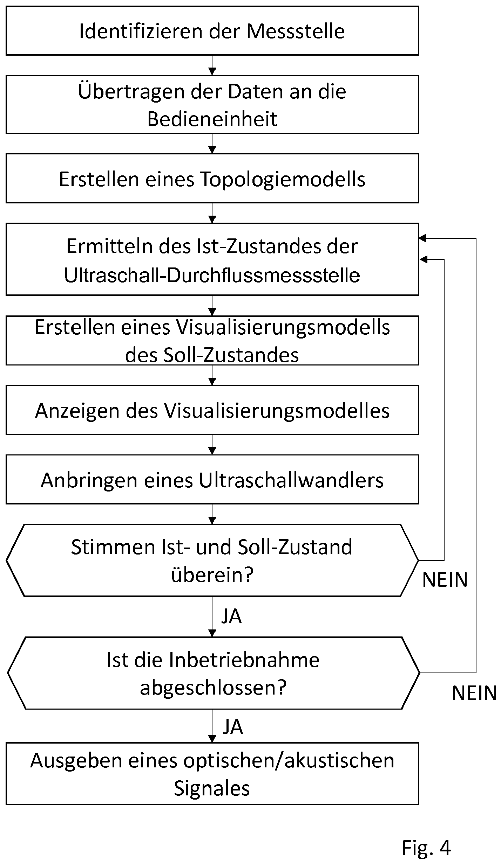

Die Fig. 4 zeigt beispielhaft eine Verfahrenskette zur Inbetriebnahme eines Clamp-On-Ultraschall-Durchflussmesssystems. Das Verfahren wird im Folgenden für den Fall beschrieben, dass eine Messstelle zum ersten Mal in Betrieb genommen wird. In einem ersten Schritt identifiziert das Bedienpersonal die vorliegende Messstelle mit der Kamera seiner Bedieneinheit. In dieser Ausgestaltung handelt es sich bei der Bedieneinheit um eine Datenbrille. Die Datenbrille weist einen Bildschirm auf, der als Ausgabeeinheit fungiert, und an dem mittels eines Projektors die Identität der Messstelle angezeigt wird. Dazu gehören Statusinformationen und die für die Ermittlung der optimalen Montageposition benötigten Größen. Wurden noch nicht alle Größen zuvor erfasst, wird dies angezeigt, so dass das Bedienpersonal diese nachträglich erfasst. Des Weiteren kann anhand der erfassten Identität auch eine Traversen-Anordnung vorgeschlagen und an der Anzeigeeinheit angezeigt werden. Nach der Identifikation der Messstelle wird ein Topologiemodell der Messstelle anhand der mit der Kamera erfassten Bildern erstellt. Die Bilder werden mithilfe eines Bilderkennungsalgorithmus analysiert und einzelne Komponenten der Messstelle, wie Rohr, Ultraschallwandler oder Störung, identifiziert. Daraus lassen sich die Geometriedaten der Messstelle bzw. der einzelnen Komponenten ermitteln und ein Ist-Zustand kann abgeleitet werden. In diesem Fall beschreibt der Ist-Zustand eine Rohrleitung ohne Ultraschallwandler, die einstellbaren Parameter sind bisher noch nicht eingestellt worden. Anhand der Identität der Messstelle und des Ist-Zustandes wird ein Soll-Zustand erstellt. Aus dem Soll-Zustand wird ein Visualisierungsmodell ermittelt, welches an dem Bildschirm angezeigt wird. In diesem Fall wird an der Messstelle, insbesondere am Außenbereich des Rohres ein Bereich angezeigt, in dem der erste Ultraschallwandler bevorzugt angebracht werden soll. Dieser Bereich hängt von der Identität der Messstelle und etwaiger eingangs oder ausgangs angebrachter Störungen ab. Dem Bedienpersonal wird das Visualisierungsmodell auf dem Bildschirm profiziert. Das Visualisierungsmodell wird dabei mit der im Sichtfeld des Bedienpersonals erfassten Messstelle überlagert. Das Bedienpersonal erhält somit die Informationen, wo genau der erste Ultraschallwandler positioniert werden soll und bringt ihn an. Nach dem Anbringen werden die Positionsdaten des angebrachten Ultraschallwandlers ermittelt und mit der vorher ermittelten optimalen Montageposition verglichen. Stimmen diese überein, wird überprüft ob die Inbetriebnahme abgeschlossen ist. Die Bedieneinheit erkennt an den

8

mittels der Kamera aufgenommenen und analysierten Bilder, dass nur ein einzelner Ultraschallwandler angebracht ist. Die Bedieneinheit ermittelt aus den Positionsdaten des ersten Ultraschallwandlers mindestens eine optimale Montageposition für den zweiten Ultraschallwandler. Das Visualisierungsmodell passt sich dem an, so dass dem Bedienpersonal im Sichtfeld die optimale Montageposition, diesmal in Form eines Ultraschallwandlers, angezeigt wird. Das Bedienpersonal bringt den zweiten Ultraschallwandler an die angezeigte Stelle an. Erst wenn beispielsweise die Konturen des angebrachten Ultraschallwandlers mit den Konturen des Visualisierungsmodells übereinstimmen und die einstellbaren Parameter somit den Soll-Zustand einnehmen, wird die Inbetriebnahme abgeschlossen. An dem Bildschirm wird dann dem Bedienpersonal in einem letzten Verfahrensschritt der Hinweis angezeigt, dass eine erfolgreiche Montage der Ultraschallwandler erfolgt ist.

## Bezugszeichenliste

| | |
|---|---|
| 1 | Ultraschall-Durchflussmessgerät |
| 2 | Erster Ultraschallwandler |
| 3 | Zweite Ultraschallwandler |
| 4 | Piezoelektrisches Element |
| 5 | Piezoelektrisches Element |
| 6 | Koppelkeil / Vorlaufkörper |
| 7 | Behältnis / Rohr |
| 8 | Regel-/Auswerteeinheit |
| 9 | Medium |
| 10 | Rohrwand |
| 11 | Visualisierungsmodell |
| 12 | Anzeigeeinheit |
| 13 | Display |
| 14 | Bedieneinheit |
| 15 | Rohrleitung |
| 16 | Koppelkeil / Vorlaufkörper |
| 17 | Kamera |
| S | Strömungsrichtung |
| SP | Schallpfad |
| ds | Abstand Ultraschallwandler zur Rohrwand |
| dr | Dicke der Rohrwand |
| di | Innendurchmesser des Rohres |
| cs | Schallgeschwindigkeit im Vorlaufkörper |
| cr | Schallgeschwindigkeit im Rohr |
| cm | Schallgeschwindigkeit im Medium |
| as | Winkel im Ultraschallwandler |
| ar | Winkel im Rohr |
| am | Winkel im Medium |
| n | Anzahl Traversen |
| c | Abstand der Ultraschallwandler |
| dx | Abstand zur idealen Montageposition |

## Patentansprüche

1. Verfahren zur Inbetriebnahme und/oder Überprüfung einer Ultraschall-Durchflussmessstelle mittels einer Bedieneinheit (14), wobei die Bedieneinheit (14) mindestens eine Anzeigeeinheit (12) und eine Kamera (17) aufweist, wobei die Ultraschall-Durchflussmessstelle eine Rohrleitung (15) zum Führen eines Mediums und mindestens einen Ultraschallwandler (2; 3) aufweist, umfassend:

  - Identifizieren der Ultraschall-Durchflussmessstelle gegenüber der Bedieneinheit (14);
  - Ermitteln von einstellbaren Parametern anhand der Identität der Ultraschall-Durchflussmessstelle;
  - Erfassen von Geometriedaten von zumindest einem Teil der Ultraschall-Durchflussmessstelle mittels der Kamera (17);

EP 3 899 443 B1

- Analysieren der erfassten Geometriedaten und Ableiten von zumindest einem Parameterwert für zumindest einen der einzustellenden Parameter anhand des Analyseresultates und der Identität;
- Ermitteln mindestens einer optimalen Montageposition anhand zumindest des abgeleiteten Parameterwertes;
- Anzeigen mindestens einer optimalen Montageposition und/oder zumindest des Parameterwertes für zumindest einen einzustellenden Parameter mittels der Anzeigeeinheit (12); und
- Überprüfen der Montageposition eines Ultraschallwandlers mit einer der optimalen Montageposition und/oder positionieren eines Ultraschallwandlers (2; 3) an eine der ermittelten optimalen Montagepositionen.

2. Verfahren nach Anspruch 1,

   wobei eine Referenzgeometrie der Ultraschall-Durchflussmessstelle mittels der Kamera (17) erfasst wird,
   wobei die Referenzgeometrie in zumindest einer Dimension eine definierte Länge oder einen definierten Winkel aufweist,
   wobei anhand der Referenzgeometrie ein dreidimensionales Topologiemodell, insbesondere ein dreidimensionales Polygonnetz der Ultraschall-Durchflussmessstelle erstellt wird.

3. Verfahren nach Anspruch 2,
   wobei das dreidimensionale Topologiemodell verwendet wird, um die von der Kamera (17) erfassten Geometriedaten zu ermitteln.

4. Verfahren nach Anspruch 1 oder 3,
   wobei im Rahmen des Analysierens der erfassten Geometriedaten mindestens ein Visualisierungsmodell, insbesondere ein dreidimensionales Visualisierungsmodell von zumindest einem Teil der Ultraschall-Durchflussmessstelle erstellt wird.

5. Verfahren nach Anspruch 4, umfassend :

   - Anzeigen des Visualisierungsmodells (11) an der optimalen Montageposition an der Rohrleitung (15),
   - Erfassen von Geometrie- und Positionsdaten von zumindest dem angebrachten Durchflusswandler mittels der Kamera (17);
   - Überprüfen auf Übereinstimmung zwischen den Geometrie- und Positionsdaten des dreidimensionalen Visualisierungsmodells und den Geometrie- und Positionsdaten des angebrachten Ultraschallwandlers (2; 3) mittels der Bedieneinheit (14), wobei das dreidimensionale Topologiemodell verwendet wird, um die von der Kamera (17) erfassten Positionsdaten zu ermitteln.

6. Verfahren nach Anspruch 5,

   wobei auf der Anzeigeeinheit (12) das Sichtfeld des Bedienpersonals dargestellt wird, und
   wobei das Visualisierungsmodell den Teil der Ultraschall-Durchflussmessstelle auf dem von der Anzeigeeinheit (12) dargestellten Sichtfeld zumindest teilweise überlagert.

7. Verfahren nach Anspruch 5,

   wobei die Anzeigeeinheit (12) als Sichtfeld des Bedienpersonals ein von der Kamera (17) erfasstes, ständig aktualisiertes Bild visualisiert und wobei das Visualisierunsmodell (11)
   der Teile der Ultraschall-Durchflussmessstelle des auf der Anzeigeeinheit (12) angezeigten Bildes zumindest teilweise überlagert.

8. Verfahren nach Anspruch 5, umfassend:

   - Analysieren der erfassten Positionsdaten und Ableiten von zumindest einem Parameterwert für zumindest einen der einzustellenden Parameter anhand des Analyseresultates und der Identität.

9. Verfahren nach zumindest einem der vorherigen Ansprüche,
   wobei als Bedieneinheit (14) eine Datenbrille verwendet wird.

10. Verfahren nach einem der vorherigen Ansprüche,
    wobei als Bedieneinheit (14) ein mobiles Endgerät verwendet wird.

**EP 3 899 443 B1**

**Claims**

1.  Procedure to commission and/or verify an ultrasonic flow measuring point using an operating unit (14), wherein the operating unit (14) has at least a display unit (12) and a camera (17), wherein the ultrasonic flow measuring point has a pipe (15) designed to conduct a medium and at least one ultrasonic transducer (2, 3), wherein said procedure comprises the following steps:

    - Identification of the ultrasonic flow measuring point in relation to operating unit (14);
    - Determination of configurable parameters using the identity of the ultrasonic flow measuring point;
    - Capturing of geometric data of at least one part of the ultrasonic flow measuring point using the camera (17);
    - Analysis of the captured geometric data and derivation of at least one parameter value for at least one of the parameters to be configured on the basis of the analysis result and the identity;
    - Determination of at least an optimum mounting position using at least the derived parameter value;
    - Display of at least one optimum mounting position and/or at least the parameter value for at least a parameter to be configured using the display unit (12); and
    - Verification of the mounting position of an ultrasonic transducer with one of the optimum mounting positions and/or positioning of an ultrasonic transducer (2, 3) at one of the optimum mounting positions that have been determined.

2.  Procedure as claimed in Claim 1,

    wherein a reference geometry of the ultrasonic flow measuring point is captured using the camera (17),
    wherein the reference geometry has a defined length or a defined angle in at least one dimension,
    wherein a three-dimensional topology model, particularly a three-dimensional polygon network of the ultrasonic flow measuring point, is created using the reference geometry.

3.  Procedure as claimed in Claim 2,
    wherein the three-dimensional topology model is used to determine the geometric data captured by the camera (17).

4.  Procedure as claimed in Claim 1 or 3,
    wherein at least a visualization model, particularly a three-dimensional visualization model of at least one part of the ultrasonic flow measuring point is created within the framework of the analysis of the captured geometric data.

5.  Procedure as claimed in Claim 4, wherein said procedure comprises the following steps:

    - Display of the visualization model (11) at the optimum mounting position on the pipe (15),
    - Capturing of the geometric data and position data of the at least one mounted transducer using the camera;
    - Verification of the match between the geometric and position data of the three-dimensional visualization model and the geometric and position data of the mounted ultrasonic transducer (2, 3) using the operating unit (14), wherein the three-dimensional topology model is used to determine the position data captured by the camera (17).

6.  Procedure as claimed in Claim 5,

    wherein the field of vision of the operator is shown on the display unit, and
    wherein the visualization model at least partially superimposes the part of the ultrasonic flow measuring point on the field of vision shown by the display unit (12).

7.  Procedure as claimed in Claim 5,

    wherein, as the field of vision of the operator, the display unit visualizes an image captured by the camera and constantly updated, and
    wherein the visualization model of the parts of the ultrasonic flow measuring point is superimposed at least partially on the image displayed on the display unit (12).

8.  Procedure as claimed in Claim 5, wherein said procedure comprises the following step:

    - Analysis of the captured position data and derivation of at least one parameter value for at least one of the parameters to be configured on the basis of the analysis result and the identity.

**9.** Procedure as claimed in one of the previous claims,
wherein smartglasses are used as the operating unit.

**10.** Procedure as claimed in one of the previous claims,
wherein mobile terminal is used as the operating unit.


**Revendications**

**1.** Procédé destiné à la mise en service et/ou la vérification d'un point de mesure de débit par ultrasons au moyen d'une unité de commande (14),
l'unité de commande (14) présentant au moins une unité d'affichage (12) et une caméra (17), le point de mesure de débit par ultrasons présentant une conduite (15) destinée à guider un produit et au moins un transducteur à ultrasons (2, 3), lequel procédé comprend les étapes suivantes :

- Identification du point de mesure de débit par ultrasons par rapport à l'unité de commande (14) ;
- Détermination de paramètres réglables à l'aide de l'identité du point de mesure de débit par ultrasons ;
- Acquisition de données de géométrie d'au moins une partie du point de mesure de débit par ultrasons au moyen de la caméra (17) ;
- Analyse des données de géométrie acquises et déduction d'au moins une valeur de paramètre pour au moins un des paramètres à régler à l'aide du résultat de l'analyse et de l'identité ;
- Détermination d'au moins une position de montage optimale à l'aide d'au moins la valeur de paramètre déduite ;
- Affichage d'au moins une position de montage optimale et/ou d'au moins la valeur de paramètre pour au moins un paramètre à régler au moyen de l'unité d'affichage (12) ; et
- Vérification de la position de montage d'un transducteur à ultrasons avec l'une des positions de montage optimales et/ou positionnement d'un transducteur à ultrasons (2, 3) à l'une des positions de montage optimales déterminées.

**2.** Procédé selon la revendication 1,

pour lequel une géométrie de référence du point de mesure de débit par ultrasons est acquise au moyen de la caméra (17),
la géométrie de référence présentant dans au moins une dimension une longueur définie ou un angle défini,
un modèle topologique tridimensionnel, notamment un réseau polygonal tridimensionnel du point de mesure de débit par ultrasons, étant créé à l'aide de la géométrie de référence.

**3.** Procédé selon la revendication 2,
pour lequel le modèle topologique tridimensionnel est utilisé pour déterminer les données de géométrie acquises par la caméra (17).

**4.** Procédé selon la revendication 1 ou 3,
pour lequel au moins un modèle de visualisation, notamment un modèle de visualisation tridimensionnel d'au moins une partie du point de mesure de débit par ultrasons est créé dans le cadre de l'analyse des données de géométrie acquises.

**5.** Procédé selon la revendication 4, lequel procédé comprend les étapes suivantes :

- Affichage du modèle de visualisation (11) à la position de montage optimale sur la conduite (15),
- Acquisition au moyen de la caméra (17) des données de géométrie et de position de l'au moins un convertisseur de débit monté ;
- Vérification de la concordance entre les données de géométrie et de position du modèle de visualisation tridimensionnel et les données de géométrie et de position du transducteur à ultrasons monté (2, 3) au moyen de l'unité de commande (14), le modèle topologique tridimensionnel étant utilisé pour déterminer les données de position acquises par la caméra (17).

**6.** Procédé selon la revendication 5,

pour lequel le champ de vision de l'opérateur est représenté sur l'unité d'affichage, et

pour lequel le modèle de visualisation superpose au moins partiellement la partie du point de mesure de débit par ultrasons sur le champ de vision représenté par l'unité d'affichage (12).

7. Procédé selon la revendication 5,

pour lequel l'unité d'affichage, en tant que champ de vision de l'opérateur, visualise une image acquise par la caméra et actualisée en permanence, et
pour lequel le modèle de visualisation des parties du point de mesure de débit par ultrasons se superpose au moins partiellement à l'image affichée sur l'unité d'affichage (12).

8. Procédé selon la revendication 5, lequel procédé comprend l'étape suivante :

- Analyse des données de position mesurées et déduction d'au moins une valeur de paramètre pour au moins l'un des paramètres à régler, sur la base du résultat de l'analyse et de l'identité.

9. Procédé selon l'une des revendications précédentes,
pour lequel des lunettes de données sont utilisées comme unité de commande.

10. Procédé selon l'une des revendications précédentes,
pour lequel un terminal mobile est utilisé comme unité de commande.

EP 3 899 443 B1

Fig. 1

14

Fig. 2

EP 3 899 443 B1

Fig. 3

```
┌─────────────────────────────────────────┐
│      Identifizieren der Messstelle       │
└─────────────────────────────────────────┘
                    │
                    ▼
┌─────────────────────────────────────────┐
│       Übertragen der Daten an die        │
│              Bedieneinheit               │
└─────────────────────────────────────────┘
                    │
                    ▼
┌─────────────────────────────────────────┐
│      Erstellen eines Topologiemodells    │
└─────────────────────────────────────────┘
                    │
                    ▼
┌─────────────────────────────────────────┐
│       Ermitteln des Ist-Zustandes der    │◄──┐
│      Ultraschall-Durchflussmessstelle    │◄─┐│
└─────────────────────────────────────────┘  ││
                    │                         ││
                    ▼                         ││
┌─────────────────────────────────────────┐  ││
│   Erstellen eines Visualisierungsmodells │  ││
│           des Soll-Zustandes             │  ││
└─────────────────────────────────────────┘  ││
                    │                         ││
                    ▼                         ││
┌─────────────────────────────────────────┐  ││
│    Anzeigen des Visualisierungsmodelles  │  ││
└─────────────────────────────────────────┘  ││
                    │                         ││
                    ▼                         ││
┌─────────────────────────────────────────┐  ││
│   Anbringen eines Ultraschallwandlers    │  ││
└─────────────────────────────────────────┘  ││
                    │                         ││
                    ▼                         ││
      ╱─────────────────────────────╲        ││
     ╱  Stimmen Ist- und Soll-Zustand ╲──────┘│  NEIN
     ╲          überein?              ╱        │
      ╲─────────────────────────────╱         │
                    │ JA                       │
                    ▼                          │
      ╱─────────────────────────────╲         │
     ╱      Ist die Inbetriebnahme    ╲────────┘  NEIN
     ╲          abgeschlossen?        ╱
      ╲─────────────────────────────╱
                    │ JA
                    ▼
┌─────────────────────────────────────────┐
│  Ausgeben eines optischen/akustischen    │
│               Signales                   │
└─────────────────────────────────────────┘
```

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1573276 B1

- US 2006123922 A1